# FASCICULE DE BREVET EUROPEEN

(11) **EP 0 540 373 B1**
(45) Date de publication et mention de la délivrance du brevet: **27.12.1995**
(21) Numéro de dépôt: 92402283.3
(22) Date de dépôt: 13.08.1992
(51) Int. Cl.: G05B 19/05

(54) **Dispositif d'entrée ou de sortie, notamment pour automate programmable**
Ein-/Ausgangsverfahren, verwendbar für programmierbare Steuerung
Input-/output device, applicable for programmable control

(30) Priorité: 05.09.1991 FR 9110971
(43) Date de publication de la demande: 05.05.1993
(73) Titulaire: AEG SCHNEIDER AUTOMATION, 75016 Paris (FR)
(72) Inventeur: Gohl, Pierre, F-06480 La Colle Sur Loup (FR); Pergent, Jacky, F-06510 Carros le Neuf (FR)
(74) Mandataire: de Saint-Palais, Arnaud Marie

(56) Documents cités:
- FR-A- 2 565 378
- FR-A- 2 607 274
- FR-A- 2 650 451
- US-A- 4 951 250

## Description

La présente invention concerne un dispositif associable à un groupe de voies d'entrée ou de sortie d'un système de commande programmable, notamment d'un automate programmable, plus particulièrement pour détecter si les voies considérées souffrent d'un défaut électrique dit de ligne tel qu'une ouverture de circuit et/ou une surintensité.

Il existe déjà des dispositifs d'entrée pour automates programmables, comprenant des voies d'entrée reliées à des capteurs et un circuit d'acheminement série des données relatives à un groupe de voies d'entrée. Le circuit d'acheminement série est relié à une unité de gestion d'entrées et/ou de sorties elle-même reliée à une unité centrale de traitement et il est agencé pour transmettre à l'unité de gestion des mots composés de bits de données relatifs aux voies successivement scrutées.

Il serait utile qu'un tel dispositif d'entrée, décrit dans le brevet FR-2 607 274, puisse détecter les défauts de ligne correspondant à un incident tel qu'une ouverture fortuite d'un circuit d'entrée ou de sortie ou à un court-circuit survenant sur une voie de sortie.

L'invention a notamment pour but de permettre de détecter des défauts de ligne affectant les voies d'entrée ou de sortie d'un système de commande d'automatismes tel qu'un automate programmable et d'en informer l'unité de gestion d'entrées et/ou de sorties du système, au moyen de cellules de comparaison autorisant une adaptation à des situations diverses d'entrée ou de sortie.

Selon l'invention, dans un dispositif du type décrit, il est prévu pour chaque voie :
- un organe de comparaison analogique comportant deux comparateurs sollicités chacun sur une première entrée par une tension analogique représentative de l'état de la voie et sollicitables sur une deuxième entrée par une tension de seuil haut et respectivement bas,
- des moyens modifiant la tension d'état en fonction d'un défaut électrique de la voie,
- les comparateurs ayant des sorties reliées à un circuit logique de traitement,
- le circuit logique de traitement étant relié via le circuit d'acheminement à une entrée de l'unité de gestion et étant agencé pour commuter sur cette entrée l'une ou l'autre sortie des comparateurs au moyen d'une logique de configuration, en fonction de l'application souhaitée.

Il est ainsi possible de commuter l'une ou l'autre des sorties des comparateurs vers l'entrée du circuit d'acheminement en fonction d'un signal de commutation cyclique, pour véhiculer en alternance sur une ligne série vers l'unité de gestion et selon le mode d'application du dispositif des trames d'état et des trames de contrôle de coupure ou de surintensité (en mode dit d'entrée) - ou des trames de contrôle de coupure et des trames de contrôle de surintensité (en mode dit de sortie) - rassemblant les données du groupe de voies.

Lorsque le dispositif est associé à des voies de sortie, on prévoit de préférence un dispositif de forçage de la tension d'état à un niveau haut ou bas, ce dispositif étant commandé par le circuit de traitement pour bloquer la voie de sortie en cas de surintensité. Selon l'application, une logique de configuration sélectionne les comparateurs, les éléments du dispositif de forçage ou d'autres éléments du circuit de traitement qui doivent être activés ou inactivés et elle peut également modifier les temps de filtrage des différents filtres.

Le contrôle de la tension d'alimentation des capteurs, préactionneurs ou bobines de relais peut s'effectuer à l'aide d'un ensemble à deux comparateurs similaire à l'organe de comparaison qui vient d'être décrit, les deux comparateurs étant affectés respectivement à la détection d'une sous-tension d'alimentation et l'autre au réarmement de voies de sortie.

La description qui suit, en regard des dessins annexés, explicite les caractéristiques et avantages d'un exemple de réalisation de l'invention.

La figure 1 montre schématiquement un dispositif d'entrée à contrôle de ligne pour automate programmable conforme à l'invention.

La figure 2 est le schéma plus détaillé d'une partie du dispositif de la figure 1.

La figure 3 est un tableau illustrant l'état logique des sorties de comparateurs dans le dispositif de la figure 2.

La figure 4 montre schématiquement un détail d'une voie d'entrée ou de sortie dans un dispositif selon l'invention.

La figure 5 montre un mode de réalisation préféré d'une partie de la voie de la figure 2.

La figure 6 est le schéma d'un circuit de sortie d'automate programmable comprenant le dispositif selon l'invention affecté au contrôle de courts-circuits.

La figure 7 est le schéma plus détaillé d'une partie du dispositif de la figure 6.

Les figures 8 et 9 sont des tableaux correspondants dans deux applications différentes, dites en logique négative et respectivement positive.

La figure 10 est une variable du schéma de la figure 6, dans une application du dispositif en protection de sorties à faible courant contre les courts-circuits.

Les figures 11 et 12 sont relatives a l'application du dispositif en protection de voies de sortie contre les courts-circuits et les coupures de ligne.

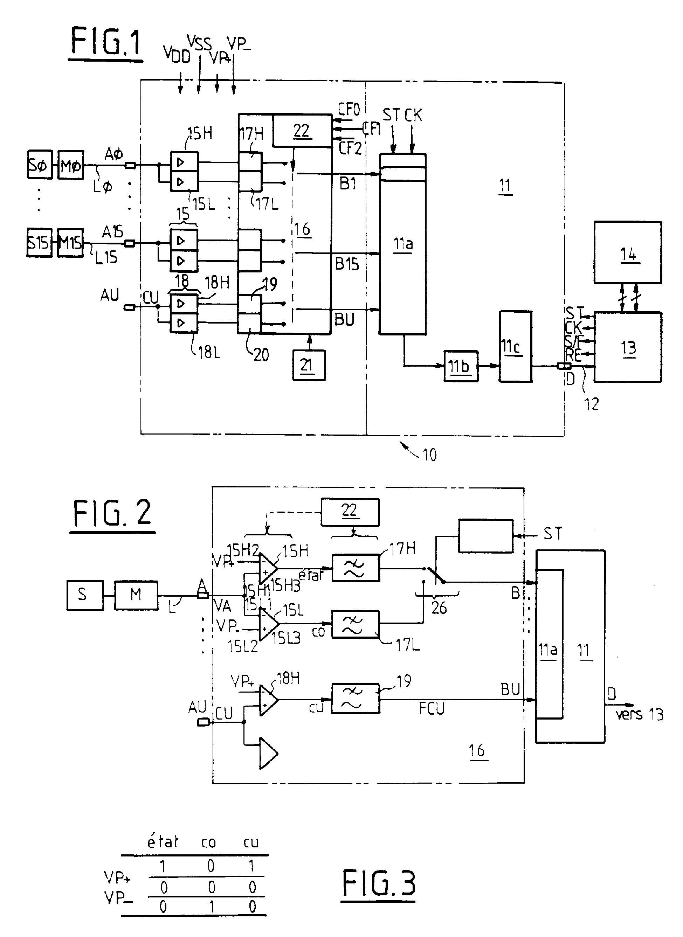

Le dispositif 10 représenté sur la figure 1 est applicable aussi bien à des voies d'entrée (mode entrée) qu'à des voies de sortie (mode sortie). Pour la clarté de l'exposé, il sera décrit tout d'abord dans son association à, par exemple, seize voies d'entrée. Les voies d'entrée sont cycliquement scrutées pour que les signaux entrants puissent être acquis puis traités en fonction d'un programme défini par l'utilisateur.

Pour chaque voie d'entrée, le dispositif 10 comprend une borne A0-A15 reliée par une ligne L à un capteur ou générateur de signal respectif S0, S15, dénommé simplement par la suite "capteur". Des moyens M0-M15 sont associés aux voies d'entrée pour modifier la tension analogique représentative de l'état de chaque voie en fonction d'un défaut électrique tel qu'une ouverture de circuit ou une surintensité. Ces moyens peuvent être inclus dans le capteur et sont constitués, par exemple, par des résistances.

Le dispositif 10 comprend un circuit 11 d'acheminement série des données relatives aux voies ; le circuit 11 est relié de façon connue par une borne D et via une ligne série 12 à une unité 13 de gestion d'entrées et/ou de sorties, elle-même reliée par un bus de données et un bus de service à une unité centrale 14 de l'automate programmable. L'unité 13 gère les entrées et les sorties et engendre des signaux d'horloge et de service appropriés.

Chaque borne A0-A15 est reliée à un organe de comparaison analogique 15 comportant deux comparateurs 15H, 15L. Chaque comparateur est sollicité sur une première entrée 15H1, 15L1 (voir figure 2) par la tension analogique qui représente l'état de la voie et sur une deuxième entrée 15H2, 15L2 par une tension de seuil haut VP+ et respectivement bas VP-.

Les sorties 15H3, 15L3 des deux comparateurs sont reliées à un circuit de filtrage et de traitement logique 16. Celui-ci comporte pour chaque sortie de comparateur 15H, 15L des moyens de filtrage respectifs 17H, 17L configurables par des signaux CF0-CF2 générés par le dispositif 10 ou par un signal S/F généré par l'unité 13.

Le dispositif 10 reçoit de plus des tensions d'alimentation V_{DD}, V_{SS} et des signaux d'horloge CK et de trame ST (à fréquence sous-multiple de celle de CK) fournis par l'unité 13. Celle-ci délivre, le cas échéant, un signal S/F permettant de programmer un temps de filtrage respectivement lent ou rapide pour un groupe de voies d'entrée. Lorsque le dispositif est utilisé dans une application impliquant la détection des courts-circuits via l'organe de comparaison 15 et la protection contre les courts-circuits détectés par l'organe 15 via le circuit logique 16, l'unité 13 peut, d'autre part, fournir un signal de réarmement RE qui est applicable au circuit logique 16 pour réarmer celui-ci après déclenchement.

A une borne d'entrée AU du dispositif 10 est appliqué un signal CU représentatif de la tension U d'alimentation des capteurs ou générateurs de signaux d'entrée, lorsque le dispositif est utilisé pour des voies d'entrée, ou de préactionneurs ou actionneurs, lorsque le dispositif est utilisé pour des voies de sortie.

La borne AU est reliée à un organe de comparaison 18, à deux comparateurs 18H, 18L respectivement affectés au contrôle de tension (mode entrée ou sortie) et au réarmement (mode sortie). Le comparateur haut 18H compare le signal CU au seuil haut VP+ qui est le même que pour les comparateurs 15H. Le comparateur bas 18L n'est pas utilisé dans une application en contrôle ou protection d'entrées. Dans une application en contrôle ou protection de sorties, le comparateur bas 18L compare à un seuil le signal de réarmement RE généré lors du réarmement qui succède à la détection d'un court-circuit sur l'une au moins des voies. Le signal RE est délivré par l'unité 13 et substitué au signal CU par des moyens décrits plus loin sur la borne AU.

Le circuit logique de traitement 16 comprend des filtres logiques 17H, 17L associés aux sorties des comparateurs respectifs 15H, 15L et un filtre logique 19 associé à la sortie du comparateur 18H. Un circuit 20 de détection de réarmement est associé à la sortie du comparateur 18L. Une horloge spécifique 21 est affectée au circuit de traitement 16 de manière à assurer à la majeure partie de ce circuit, notamment aux filtres, une vitesse de fonctionnement indépendante de celle du circuit 11, qui est cadencé par les signaux ST et CK fournis par l'unité de gestion 13. De plus, le circuit de traitement 16 reçoit les signaux de configuration CF0, CF1, CF2 ; ces signaux sont appliqués à une logique de configuration 22 qui configure le dispositif en fonction des applications souhaitées et notamment modifie de manière appropriée les temps de filtrage des filtres 17H, 17L, 19.

Le circuit 16 multiplexe les sorties des comparateurs hauts et bas pour les présenter au circuit d'acheminement 11. Comme décrit dans le brevet FR-2 607 274, le circuit 11 possède un registre parallèle-série 11a, un circuit de contrôle de parité 11b et un ensemble 11c à logique et registres, relié à la borne D par laquelle sont acheminées, avec un cadencement de bits et de trames donné par les signaux CK et ST, les trames des données d'état et de défaut vers l'unité de gestion 13.

La figure 2 représente plus en détail une voie d'entrée du dispositif de la figure 1. La borne d'entrée A est reliée aux entrées 15H1, 15L1 des comparateurs haut 15H et bas 15L. Le seuil VP+ - par exemple de 2,5V - du comparateur 15H sert à déterminer si la voie est à l'état marche ou arrêt et le seuil VP- - par exemple de 0,6V - sert à déterminer si l'état de la voie est normal ou s'il y a un défaut d'ouverture de circuit. En particulier, une coupure de la ligne L peut être détectée de façon connue grâce à un moyen M constitué par une forte résistance montée en parallèle au capteur ; on fait ainsi circuler, même quand le capteur est ouvert, un faible courant par la borne A et ce courant cesse de circuler en cas d'ouverture accidentelle de la voie. La borne AU est reliée via le comparateur 18H à un filtre logique 19 dont la sortie est reliée à l'entrée BU du circuit 11. La sortie du comparateur 18L n'est pas connectée. L'état du signal filtré FCU disponible à la sortie du filtre 19 peut ainsi être pris en compte, comme on le voit, pour être incorporé aux trames de données transmises à l'unité 13.

Le tableau de la figure 3 montre que la voie est considérée en marche (1) lorsque VA > VP+ et à l'arrêt (0) lorsque VA < Vp+ ; la ligne d'entrée est considérée comme ouverte lorsque VA < VP- et normale lorsque VA > VP- (colonne CO) . La tension d'alimentation U des capteurs est normale si CU > VP+, en défaut si CU < VP+ (colonne CU).

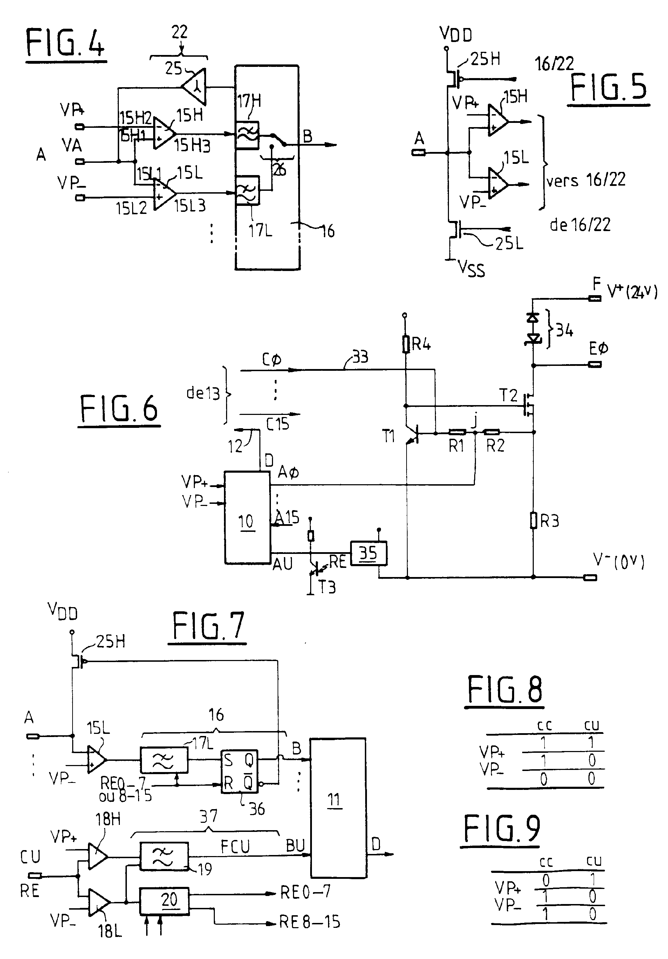

On voit sur la figure 4 un exemple de réalisation d'organe de comparaison 15 associé à une borne A correspondant à une voie d'entrée ou de sortie. Pour faciliter l'utilisation du dispositif quand on l'applique à la protection de sorties, il est prévu un organe 25, à trois états, interposé entre le circuit de traitement 16 et la borne A ; dans un état de haute impédance, l'organe 25 laisse la tension de voie s'appliquer aux entrées 15H1, 15L1 des comparateurs ; dans ses deux états de faible impédance, l'organe 25 force la tension de la borne A à un niveau haut ou respectivement bas, ce qui permet au circuit de traitement 16 de bloquer la voie de sortie correspondante d'une façon qui sera décrite plus loin.

Un commutateur 26 est prévu dans le circuit de traitement 16 pour commuter selon l'application, soit de manière permanente, soit de manière cyclique, les sorties des deux comparateurs 15H, 15L vers une sortie B du circuit 16 qui est reliée au registre sérialiseur 11a du circuit 11. Il peut s'agir d'une commutation alternée, par exemple au moyen du signal de trame ST. Ainsi, dans le mode entrée de la figure 1, le registre 11a reçoit des bits B1-B15 qui peuvent être alternativement significatifs de l'état des capteurs et de la coupure éventuelle du circuit correspondant ; le registre 11a formant donc des trames alternées "d'état" et "de coupure" qui sont acheminées successivement à l'unité de gestion 13. Dans un mode sortie qui sera décrit plus loin, les bits B1-B15 pourront être alternativement représentatifs de la présence d'un court-circuit sur les diverses lignes de sortie et de la coupure de ces diverses lignes.

La figure 5 représente un mode de réalisation préféré de l'organe à trois états 25. On utilise à cet effet un interrupteur MOS 25H à canal P et un interrupteur MOS 25L à canal N respectivement montés entre le potentiel V_{DD} et la borne A et entre celle-ci et le potentiel V_{SS}. Les grilles des interrupteurs MOS sont commandées sélectivement par le circuit 16 et sa logique 22, comme expliqué plus loin.

Le dispositif décrit en regard des figures 1 et 4 est également utilisable pour protéger des voies de sortie contre les courts-circuits et/ou pour signaler l'état "ligne ouverte" de ces voies. Dans le cas où l'on a seize voies de sortie, les bornes A1-A15 sont reliées à des actionneurs ou préactionneurs et la borne AU est utilisée, d'une part, pour contrôler la tension d'alimentation des voies de sorties et, d'autre part, pour entrer un signal de réarmement lorsque les voies ont été bloquées après constatation d'un défaut. Deux bornes distinctes pourraient bien sûr être prévues pour le contrôle de tension et le réarmement.

Les figures 6 à 8 montrent l'application du dispositif à la protection de sorties continues en logique négative.

Avec seize voies de sortie, comme illustré sur la figure 6, les données sont présentées sur seize sorties parallèles C0-C15. Chaque sortie C est reliée par un conducteur 33, d'une part, à la base d'un transistor de commande T1 de type NPN dont le collecteur est relié à une tension positive, par exemple 8V, et l'émetteur à une tension V-, par exemple 0V et, d'autre part, via un pont résistif R1, R2 à la source d'un transistor MOS canal N de puissance T2. La source de T2 est par ailleurs reliée par une résistance R3 au 0^{V} ; la grille de T2 est reliée au potentiel 8^{V} et le drain de T2 est relié, d'une part, à la borne de sortie E0 et, d'autre part, via des éléments antiretour et/ou de protection 34 à un potentiel d'alimentation V+, par exemple 24V. La jonction J entre R1 et R2 est reliée à la borne d'entrée A du dispositif 10. La borne de sortie série D du dispositif 10 assure le retour série des données vers l'unité de gestion 13. L'entrée AU du dispositif 10 est reliée, d'une part, à un détecteur de tension 35, d'autre part, à un optocoupleur de réarmement T3 comme indiqué ; l'optocoupleur est sollicité par le signal de réarmement RE lorsque celui-ci est délivré par l'unité de gestion 13.

Comme on le voit sur la figure 7, qui illustre les principaux éléments alors actifs du dispositif 10, seul le comparateur bas 15L et l'interrupteur 25H sont connectés pour chaque voie de sortie. Les éléments 15H, 17H et 25L sont alors inactifs. La sortie du filtre bas 17L est connectée à l'entrée S d'une bascule RS 36 dont la sortie Q est reliée, d'une part, à la borne B du circuit de traitement qui est connectée au circuit d'acheminement 11, d'autre part, avec inversion à la grille de l'interrupteur 25H. La sélection des éléments actifs et inactifs est effectuée par la logique de configuration 22.

Pour ce qui concerne les signaux CU et RE, les sorties des comparateurs correspondants 18H, 18L sont filtrées et traitées par un circuit 37 comprenant le filtre 19 et le circuit de détection de réarmement 20 cité en regard de la figure 1.

Le filtre 19 associé à la borne de contrôle de tension AU a sa sortie reliée au circuit 11. Les sorties du circuit de détection 20 servent à réarmer les voies 0 à 7 (signal RE0-7) et respectivement 8 à 15 (signal RE8-15). Le signal correspondant est appliqué pour chaque groupe de huit voies au filtre 17L et à l'entrée R de la bascule 36.

Comme on le voit figure 8, suivant que la tension en A est supérieure ou inférieure à VP-, on détecte la présence ou l'absence d'un court-circuit (colonne CC) et, selon que le signal CU est supérieur ou inférieur à VP+, la présence ou l'absence d'alimentation (colonne CU).

La protection de sorties continues en logique positive s'effectue de la même manière , mais avec mise en service d'autres éléments de la cellule de comparaison par la logique de configuration 22. Le comparateur haut 15H et le filtre haut 17H sont alors connectés à la bascule 36 et l'interrupteur bas 25L est connecté à la sortie de la bascule ; le comparateur bas et le filtre bas 15L, 17L et l'interrupteur haut 25H sont alors inactifs.

Pour assurer la protection de sorties continues à faible courant, par exemple à courant nominal de 0,1A, la logique de configuration met en activité le comparateur haut 15H et le filtre haut 17H connecté à la bascule 36, ainsi que l'interrupteur haut 25H relié à la sortie Q de la bascule. Le comparateur bas et l'interrupteur bas sont alors inactifs.

La figure 9 montre pour les applications en logique positive et à faible courant que, suivant que la tension en A est supérieure ou inférieure à VP+, on détecte l'absence ou la présence d'un court-circuit (colonne CC).

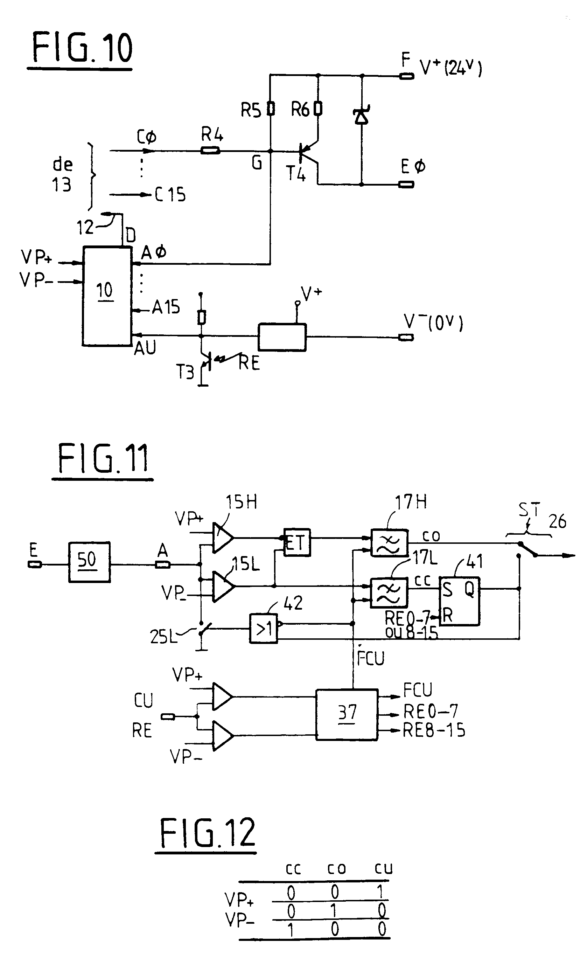

La figure 10 illustre la constitution d'une voie de sortie à faible courant protégée au moyen du dispositif selon l'invention. Chaque sortie C est reliée par une résistance R4 à la base d'un transistor T4 et par une résistance R5 à une borne F d'alimentation continue, par exemple 24V. L'émetteur de T4 est relié à F par une résistance R6 et le collecteur de T4 est relié à la borne de sortie E. Le point G de jonction entre R4, R5 et la base de T4 est relié à l'entrée A du dispositif de protection 10.

Le dispositif selon l'invention est également utilisable pour protéger des sorties continues en coordination avec un dispositif de surveillance et de commande de sortie 50 qui donne un signal de tension diffèrent suivant qu'il détecte un défaut d'ouverture de ligne ou un défaut de surintensité et qui est apte à ouvrir ou fermer la voie de sortie en réponse à un signal de commande. Ce dispositif de surveillance fait partie des moyens M. Dans ce cas sont mis en oeuvre pour chaque entrée A du dispositif de protection 10 les deux comparateurs 15H, 15L et l'interrupteur bas 25L, comme illustré par la figure 11. Les sorties des deux comparateurs sont reliées aux entrées d'une porte logique ET dont la sortie est reliée au filtre haut 17H ; la sortie du comparateur 15L est reliée via le filtre 17L à l'entrée S d'une bascule RS 41 ; la sortie Q de la bascule est reliée, d'une part, à un commutateur 26 de fonction similaire à celui de la figure 2 et, d'autre part, à la grille de l'interrupteur 25L via une porte logique OU 42 sollicitée par ailleurs par le signal filtré FCU inversé.

Le signal FCU est de plus transmis à des entrées d'inhibition des filtres 17H, 17L ; de la sorte, en l'absence de tension, le signal FCU est à zéro et gèle le filtrage des défauts de court-circuit (cc) et de ligne ouverte (co), ainsi que le réarmement des sorties en défaut. Via la porte 42, le signal FCU met en conduction l'interrupteur 25L pour bloquer la voie de sortie à laquelle est associé le dispositif de surveillance 50. La bascule 41 est réarmable par le signal de réarmement RE du groupe de voies correspondant. Les signaux FCU et RE 0-7,RE 8-15 sont générés par un circuit 37 identique à celui illustré à la figure 7.

Les courts-circuits (cc) sont traités par les éléments bas 15L, 17L et les défauts d'ouverture de ligne (co) par les éléments hauts 15H, 17H ; le commutateur 26 cadencé par le signal ST permet, en combinaison avec le registre série 11a, la formation multiplexée de trames successives représentant alternativement les défauts éventuels de court-circuit et respectivement de ligne ouverte.

La figure 12 montre l'utilisation des seuils VP+, VP- dans le cas de la figure 11.

Le dispositif qui vient d'être décrit fonctionne de la manière suivante.

Lorsque le mode "entrée" du dispositif est choisi, la logique 22 met en oeuvre les éléments appropriés du circuit de traitement 16, comme indiqué sur la figure 2.

Si la ligne L est normale et dans un premier état du capteur 5, la tension VA est supérieure à VP+, de sorte que l'état logique des sorties des comparateurs 17H, 17L est respectivement 1 et 0. Selon un rythme déterminé par la commande du commutateur 26 - dans le cas présent, il s'agit d'une alternance - le bit B est donc présenté à l'entrée du circuit 11 avec la valeur 1 pour signifier que le capteur est dans son premier état et la valeur 0 pour signifier que la ligne est normale.

Si la ligne L est normale et dans un deuxième état du capteur S, la tension VA est comprise entre VP+ et VP-, de sorte que l'état logique des sorties des comparateurs devient 0 et 0. Si la ligne est coupée, la tension VA devient inférieure à VP- et l'état logique des sorties des comparateurs passe à 0 et 1 ; cette dernière valeur permet d'acheminer l'information "ligne coupée" à l'unité de gestion 13 par la liaison série 12.

Dans l'application représentée pour la protection d'entrées, la partie basse 15L, 17L de l'organe de comparaison sert à détecter les ouvertures intempestives de ligne. On pourrait éventuellement distinguer les courts-circuits des ouvertures de ligne en ajoutant, à côté du dispositif 10, un autre dispositif, également connecté aux bornes A et présentant des comparateurs hauts 15H affectés d'un seuil VP+ supérieur à celui du dispositif 10, par exemple de 4 volts au lieu de 2,5 volts, pour réagir aux surintensités.

Lorsqu'un mode "sortie" du dispositif est choisi, la logique 22 met en oeuvre les éléments appropriés. Si l'on suppose que l'application choisie est celle des figures 6 à 8, ces éléments sont ceux illustrés sur la figure 7. L'état des sorties déterminé par l'unité centrale 14 est transmis par l'unité de gestion 13 aux différentes voies. Pour bloquer une voie, le transistor T1 respectif est rendu passant par le signal de sortie C ; le transistor T2 est donc bloqué. Pour rendre la voie passante, T1 est bloqué par le signal C et la grille de T2, portée à un potentiel suffisant, rend T2 conducteur.

Lorsque la charge de la voie est normale, la tension aux bornes de R3 reste faible et le potentiel résultant en A reste inférieur à VP-. Dès que survient une surintensité, VA dépasse VP- et la bascule 36 du circuit de traitement 16 (figure 7) rend l'interrupteur 25H conducteur après un temps déterminé par le filtrage, de sorte que le potentiel A est forcé à V_{DD} (V_{SS} + 5 volts par exemple), ce qui accroît le potentiel de base de T1 et rend celui-ci passant. T2 est alors bloqué et la voie de sortie reste bloquée jusqu'à ce que l'unité de gestion 13 envoie le signal de réarmement RE. Appliqué à l'optocoupleur T3, ce signal laisse le potentiel en A s'établir en fonction du signal de sortie C et du maintien éventuel du défaut. L'émission du signal de réarmement RE 0-7 et RE 8-15 pour chaque groupe de huit voies permet de réarmer les filtres 17L et les bascules 36.

Dans l'application décrite en regard des figures 11 et 12, en cas de surintensité, le dispositif 10 bloque la sortie en portant à V_{SS} le potentiel aux points A et H après un temps défini par le filtrage, le dispositif 50 bloquant alors le circuit de sortie.

## Revendications

1. Dispositif (10) d'entrée ou de sortie pour système de commande programmable, notamment pour automate programmable, comprenant pour un groupe de voies un circuit d'acheminement (11) des données relatives à ces voies vers une unité (13) de gestion d'entrées et/ou de sorties et comprenant pour chaque voie un organe de comparaison analogique (15) sollicité sur une première entrée par une tension analogique représentative de l'état de la voie et sur une deuxième entrée par une tension de seuil et des moyens (M0-M15) modifiant la tension d'état en fonction d'un défaut électrique de la voie, l'organe de comparaison (15) ayant une sortie reliée à un circuit logique de traitement (16),
caractérisé par le fait que :
- l'organe de comparaison analogique (15) comprend deux comparateurs (15H, 15L) dont la première entrée est sollicitée par la tension d'état de voie et dont la deuxième entrée est sollicitable par une tension de seuil haut (VP+) et respectivement bas (VP-),
- le circuit logique de traitement (16) étant relié via le circuit d'acheminement (11) à une entrée de l'unité de gestion (13) et étant agencé pour commuter sur cette entrée l'une ou l'autre sortie des comparateurs en fonction de l'application souhaitée, au moyen d'une logique de configuration (22).

2. Dispositif selon la revendication 1,
caractérisé par le fait que les sorties des comparateurs sont reliées au circuit logique de traitement (16) par l'intermédiaire de moyens de filtrage respectifs (17H, 17L) et que la logique de configuration (22) est apte à modifier les temps de filtrage des moyens de filtrage (17H, 17L).

3. Dispositif selon l'une des revendications 1 et 2,
caractérisé par le fait que le circuit logique de traitement (16) commute cycliquement l'une ou l'autre sortie des comparateurs (15H, 15L) vers l'entrée du circuit d'acheminement (11) en fonction d'un signal de commutation cyclique (ST).

4. Dispositif selon la revendication 3,
caractérisé par le fait que les moyens (M) modifiant la tension d'état et les seuils haut et bas des comparateurs (15H, 15L) sont tels que l'unité de gestion (13) reçoit en alternance des trames de contrôle de coupure de ligne et des trames de contrôle de surintensité pour les voies respectives du groupe de voies.

5. Dispositif selon la revendication 3,
caractérisé par le fait que les moyens (M) modifiant la tension d'état et les seuils haut et bas des comparateurs (15H, 15L) sont tels que l'unité de gestion (13) reçoit en alternance des trames d'état et des trames de contrôle de ligne pour les voies respectives du groupe de voies.

6. Dispositif selon !'une des revendications 1 à 4,
caractérisé par le fait que les voies sont des voies de sortie et qu'un dispositif de forçage (25) de la tension d'état à un niveau haut ou bas est associé au circuit de traitement (16), le dispositif de forçage étant commandé par la sortie d'un comparateur (15H, 15L) et étant relié à la première entrée du comparateur pour bloquer la voie de sortie correspondante en cas de surintensité.

7. Dispositif selon la revendication 6,
caractérisé par le fait que le dispositif de forçage (25) comprend deux interrupteurs (25H, 25L) susceptibles d'appliquer l'un un potentiel haut (V_{DD}) et l'autre, un potentiel bas (V_{SS}) à la première entrée des comparateurs (15H, 15L) et qui sont susceptibles d'être mis à l'état actif ou inactif par la logique de configuration (22) en fonction de l'application.

8. Dispositif selon l'une des revendications 1 à 6,
caractérisé par le fait qu'il est prévu un organe de contrôle de tension d'alimentation, cet organe comprenant un premier comparateur (18H) sollicité sur une première entrée par une tension d'alimentation (CU) des voies et sur une deuxième entrée par une tension de seuil (VP+), le comparateur ayant une sortie filtrée et reliée au circuit d'acheminement (11).

9. Dispositif selon la revendication 8,
caractérisé par le fait que, pour un groupe de voies, il est prévu un deuxième comparateur (18L) sollicité sur une première entrée par une tension de réarmement (RE) et sur une deuxième entrée par une tension de seuil (VP-), le comparateur ayant une sortie reliée, d'une part, à un détecteur (20) de réarmement, d'autre part, à des moyens de filtrage (19) associés à la sortie du premier comparateur (18H) pour en inhiber le filtrage en cas de réarmement.

## Patentansprüche

1. Eingangs- oder Ausgangsvorrichtung (10) für ein programmierbares Steuersystem, insbesondere für einen programmierbaren Automaten, die für eine Gruppe von Kanälen eine Leitschaltung (11) für die sich auf diese Kanäle beziehenden Daten zu einer Verwaltungseinheit (13) der Eingänge und/oder Ausgänge und für jeden Kanal ein analoges Vergleichsorgan (15), das an einem ersten Eingang mit einer für den Zustand des Kanals repräsentativen analogen Spannung und an einem zweiten Eingang mit einer Schwellenspannung beaufschlagt wird, und Mittel (M0 bis M15) aufweist, die die Zustandsspannung in Abhängigkeit von einem elektrischen Fehler des Kanals verändern, wobei ein Ausgang des Vergleichsorgans (15) mit einer logischen Verarbeitungsschaltung (16) verbunden ist,
dadurch gekennzeichnet, daß
- das analoge Vergleichsorgan (15) zwei Komparatoren (15H, 15L) aufweist, deren ersten Eingang von der Kanal-Zustandsspannung beaufschlagt wird und deren zweiter Eingang von einer oberen Schwellenspannung (VP+) bzw. unteren Schwellenspannung (VP-) beaufschlagt werden kann,
- die logische Verarbeitungsschaltung (16) über die Leitschaltung (11) mit einem Eingang der Verwaltungsschaltung (13) verbunden und so ausgebildet ist, daß sie an diesen Eingang den einen oder den anderen Ausgang der Komparatoren in Abhängigkeit von der gewünschten Anwendung mittels einer Konfigurationslogik (22) schalten kann.

2. Vorrichtung nach Anspruch 1, dadurch gekennzeichnet, daß die Ausgänge der Komparatoren mit der logischen Verarbeitungsschaltung (16) über Filtermittel (17H bzw. 17L) verbunden sind und daß die Konfigurationslogik (22) die Filterzeiten der Filtermittel (17H, 17L) verändern kann.

3. Vorrichtung nach einem der Ansprüche 1 und 2, dadurch gekennzeichnet, daß die logische Verarbeitungsschaltung (16) zyklisch den einen oder den anderen Ausgang der Komparatoren (15H, 15L) an den Eingang der Leitschaltung (11) in Abhängigkeit von einem zyklischen Schaltsignal (ST) schaltet.

4. Vorrichtung nach Anspruch 3, dadurch gekennzeichnet, daß die Mittel (M), die die Zustandsspannung und die oberen und unteren Schwellwerte der Komparatoren (15H, 15L) verändern, derart sind, daß die Verwaltungseinheit (13) alternierend Kontrollrahmen für Leitungsunterbrechungen und Kontrollrahmen für Überströme für die jeweiligen Kanäle der Gruppe von Kanälen empfängt.

5. Vorrichtung nach Anspruch 3, dadurch gekennzeichnet, daß die Mittel (M), die die Zustandsspannung und die oberen und unteren Schwellwerte der Komparatoren (15H, 15L) verändern, derart sind, daß die Verwaltungseinheit (13) alternierend Zustandsrahmen und Leitungs-Kontrollrahmen für die jeweiligen Kanäle der Gruppe von Kanälen empfängt.

6. Vorrichtung nach einem der Ansprüche 1 bis 4, dadurch gekennzeichnet, daß die Kanäle Ausgangskanäle sind und daß eine Vorrichtung (25) zum Zwingen der Zustandsspannung auf einen oberen oder unteren Pegel der Verarbeitungsschaltung (16) zugeordnet ist, wobei die Zwingvorrichtung vom Ausgang eines Komparators (15H, 15L) gesteuert wird und mit dem ersten Eingang des Komparators verbunden ist, um den entsprechenden Ausgangskanal im Fall eines Überstroms zu blockieren.

7. Vorrichtung nach Anspruch 6, dadurch gekennzeichnet, daß die Zwingvorrichtung (25) zwei Schalter (25H, 25L) aufweist, von denen einer ein hohes Potential (V_{DD}) und der andere ein niedriges Potential (V_{SS}) an den ersten Eingang der Komparatoren (15H, 15L) anlegen können, und die von der Konfigurationslogik (22) in Abhängigkeit von der Anwendung in den aktiven oder den inaktiven Zustand versetzt werden können.

8. Vorrichtung nach einem der Ansprüche 1 bis 6, dadurch gekennzeichnet, daß ein Kontrollorgan für die Speisespannung vorgesehen ist, wobei dieses Organ einen ersten Komparator (18H) aufweist, der an einem ersten Eingang mit einer Speisespannung (CU) der Kanäle und an einem zweiten Eingang mit einer Schwellenspannung (VP+) beaufschlagt wird, wobei ein Ausgang des Komparators gefiltert und mit der Leitschaltung (11) verbunden ist.

9. Vorrichtung nach Anspruch 8, dadurch gekennzeichnet, daß für eine Gruppe von Kanälen ein zweiter Komparator (18L) vorgesehen ist, der an einem ersten Eingang mit einer Aktivierungsspannung (RE) und an einem zweiten Eingang mit einer Schwellenspannung (VP-) beaufschlagt wird, wobei ein Ausgang des Komparators einerseits mit einem Aktivierungs-Detektor (20) und andererseits mit Filtermitteln (19) verbunden ist, die dem Ausgang des ersten Komparators (18H) zugeordnet sind, um seine Filterung im Fall einer Aktivierung zu verhindern.

## Claims

1. Input or output device (10) for programmable control systems, in particular for programmable automatic controllers, comprising for a group of channels a circuit (11) for routing data relating to said channels to an input and/or output control unit (13) and comprising for each channel an analog comparator unit (15) receiving on a first input an analog voltage representing the state of the channel and on a second input a threshold voltage and means (M0-M15) for modifying the state voltage according to an electrical fault on the channel, said comparator unit (15) having an output connected to a processor logic circuit (16),
characterized in that :
- said analog comparator unit (15) comprises two comparators (15H, 15L) the first input of which receives the channel state voltage and the second input of which receives respectively a high (VP+) and low (VP-) threshold voltage,
- said processor logic circuit (16) being connected via said routing circuit (11) to an input of said control unit (13) and being adapted to switch to said input one or other output of said comparators according to the required application by means of a configurator logic (22).

2. Device according to claim 1,
characterized in that the outputs of said comparators are connected to said processor logic circuit (16) by respective filter means (17H, 17L) and said configurator logic (22) is adapted to modify the filter times of said filter means (17H, 17L).

3. Device according to one of claims 1 and 2,
characterized in that said processor logic circuit (16) cyclically switches one or the other comparator (15H, 15L) output to the input of said routing circuit (11) according to a cyclic switching signal (ST).

4. Device according to claim 3,
characterized in that said means (M) for modifying the state voltage and the high and low thresholds of said comparators (15H, 15L)) are such that said control unit (13) receives alternately line open circuit monitor frames and overcurrent monitor frames for the respective channels of the group of channels.

5. Device according to claim 3,
characterized in that said means (M) for modifying the state voltage and said high and low comparator (15H, 15L) thresholds are such that said control unit (13) receives alternately state frames and line monitor frames for the respective channels of the group of channels.

6. Device according to one of claims 1 to 4,
characterized in that said channels are output channels and a device (25) for forcing said state voltage to a high or low level is associated with said processor logic circuit (16), said forcing device being controlled by the output of a comparator (15H, 15L) and connected to the first input of said comparator to disable the respective output channel in response to an overcurrent.

7. Device according to claim 6,
characterized in that said forcing device (25) comprises two switches (25H, 25L) respectively adapted to apply a high-voltage (V_{DD}) and a low-voltage (V_{SS}) to said first input of said comparators (15H, 15L) and which are adapted to be activated or de-activated by said configurator logic (22) according to the application.

8. Device according to one of claims 1 to 6,
characterized in that a supply voltage monitor unit is provided, comprising a first comparator (18H) receiving on a first input a channel supply voltage (CU) and on a second input a threshold voltage (VP+), said comparator having a filtered output connected to said routing circuit (11).

9. Device according to claim 8,
characterized in that it comprises, for a group of channels, a second comparator (18L) receiving on a first input a reset voltage (RE) and on a second input a threshold voltage (VP-), said comparator having an output connected to a reset detector (20) and to filter means (19) associated with the output of said first comparator (18H) to disable filtering on resetting.
